# EUROPEAN PATENT SPECIFICATION

(11) **EP 3 674 102 B1**
(45) Date of publication and mention of the grant of the patent: **29.09.2021**
(21) Application number: 18248100.2
(22) Date of filing: 27.12.2018
(51) Int. Cl.: B60B 3/02

(54) **WHEEL FOR VEHICLES AND MANUFACTURING METHOD OF SAID WHEEL**
RAD FÜR FAHRZEUGE UND VERFAHREN ZUR HERSTELLUNG EINES DERARTIGEN RADES
ROUE POUR VÉHICULES ET PROCÉDÉ DE FABRICATION DE LADITE ROUE

(43) Date of publication of application: 01.07.2020
(73) Proprietor: Alcar Ruote SA, 6928 Manno (CH)
(72) Inventor: Catalano, Giovanni, 6015 Gudo (CH); Alpini, Walter, Appiano Gentile (IT)
(74) Representative: Modiano, Gabriella Diana

(56) References cited:
- WO-A2-98/29267
- DE-A1-102016 202 381
- US-A1- 2010 117 444
- US-A1- 2011 156 474

## Description

The present invention relates to a wheel for vehicles and to a manufacturing method of said wheel. An example belonging to the state of the art is disclosed in document US 2010/117444 A1.

Wheels for vehicles are mechanical components that connect the tire to a (motorized or free) axle of the vehicle; they are usually used in vehicles such as motorcycles, cars, vans, trucks and the like.

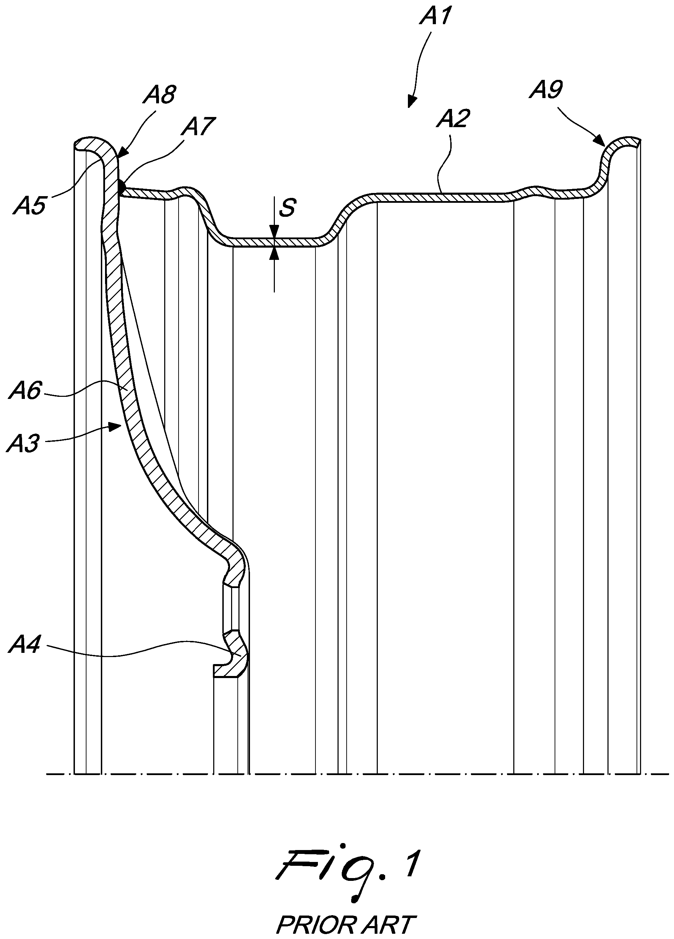

With reference to Figure 1, it shows a steel wheel according to the background art; two main parts, i.e., the rim portion A2 and the disc portion A3, are distinguished in the wheel A1:
the rim A2 delimits partially the seat of the tire and defines (partially) the chamber which, in the condition in which the tire is mounted, is filled with a fluid (usually air) under pressure,
the disc A3 is composed in turn of three parts: the central portion or hub portion A4, configured to be connected to the axle of the vehicle, a front flange A5, coupled to the rim A2, and a connecting portion A6, which connects the hub portion A4 to the front flange A5.

The connecting portion A6 is provided in various shapes and comprises solid spokes or wire spokes, optionally in variable number and shapes, and greatly characterizes the aesthetic appearance of the wheel, since it is the part that is most visible when the wheel is mounted; the term "disc" actually is not used in the field of reference to indicate an actual solid disc but indicates the generally disc-like part of the wheel A1 that is visible when mounted on the vehicle.

In the background art, wheels are usually distinguished as a function of the material that composes them, to which specific production processes are linked; if one wishes to make a basic distinction, the families of aluminum "alloy" wheels and of "steel" wheels are identified.

The former are provided by using alloys of materials made of aluminum, magnesium or the like; usually the manufacture of these wheels is provided by means of processes of casting, molding (low-pressure molding for example), forging or chip-forming (obtained from a solid workpiece), substantially monolithically and as a single part. One advantage of these wheels is that they have considerable flexibility in the shapes that can be provided.

However, these wheels are not free from limitations, which include a relatively high cost (linked both to the cost of the raw material and to the processes required in manufacture), high mechanical rigidity and limited (if not nonexistent) possibility of repair in case of damage that has caused a plastic deformation of the wheel itself.

On the other hand, steel wheels are cheaper, both due to the cost of the raw material and to the manufacturing processes, and therefore are more interesting from this standpoint; furthermore, the steel of which they are made can be recycled, and this makes them even more desirable from the point of view of environmental impact.

The present invention relates preferably to the family of steel wheels, an example of which will now be discussed for the sake of completeness in description.

Figure 1 shows a typical example of a car wheel, particularly for off-road vehicles, made of steel according to the background art, which is useful to understand its limitations.

In the steel wheel A1 of Figure 1, the rim A2 and the front flange A5 are welded together by arc welding (MIG/MAG) A7 with the use of weld material.

The edges of the tire, once installed, are contained at the two opposite faces of the wheel by two opposite shoulder profiles A8 and A9.

The shoulder profile, in a fully general manner, is substantially S-shaped as a whole, with
a flared edge which is directed outward with respect to the seat of accommodation of the tire in the wheel, so as to facilitate its mounting,
a radially extended portion which applies an action of containment of the free edge of the tire when mounted
a curved blending portion which connects the radially extended portion to the substantially cylindrical body of the rim.

Going back to Figure 1, one of the two shoulder profiles (the outer one A8 with reference to the wheel A1 mounted on the vehicle), is provided monolithically with the front flange A5 of the disc, which in turn is monolithic with the connecting portion A6 and with the hub portion A4; the internal shoulder profile A9 is instead part of the rim (the terms "internal" and "external" are used in this context to indicate the position with respect to the vehicle in the condition in which the wheel is mounted).

In order to provide the wheel A1, the rim A2 (usually provided by bending starting from a steel plate) is, as mentioned, welded to the front flange, with a welding path A7 that is extended along a ring and is provided at or close to the external shoulder profile; as mentioned, the welding A8 that is currently used is arc welding (MIG/MAG) with weld material, which accordingly generates a welding bead A7 that has a certain thickness.

Although in general they are preferable due to their cost, elasticity, possibility of recycling and possibility of repair, steel wheels are affected, with respect to alloy wheels, by some problems which limit their diffusion.

One of the main limitations is linked to the fact that the arc weld A7 that is used to join the rim A2 to the front flange A5 produces a considerable localized heat addition, with the risk of causing geometric deformations and of modifying the crystalline structure of the steel; this forces to use rims that have a relatively high thickness S (greater than the one required for their structural strength), so as to reduce these drawbacks. However, on the other hand this also entails that steel wheels thus provided are heavier than necessary and are not optimum in use on road vehicles: the consequence is that ultimately these steel wheels are used practically only on off-road vehicles, where the greater weight of the wheel has a smaller influence on the drivability of the vehicle.

Another limitation of these wheels is linked to the fact that the weld A7 that is used produces welding slag and residues that can foul the surfaces that are adjacent to the welding bead A7: however, since the latter is provided proximate to the external shoulder profile A8, this may entail problems in mounting the tire and often forces additional mechanical work, specifically aimed at removing these residues.

For the same reason, if the welding bead A7 is excessively in relief with respect to the welded surfaces, one must proceed with chip-forming processes (for example, milling or turning), so as to reduce the thickness of the bead A7 and not hinder the mounting of the tire.

The aim of the present invention is to provide a wheel for vehicles and a manufacturing method of said wheel that is capable of improving the background art in one or more of the aspects indicated above.

Within the scope of this aim, an object of the invention is to provide a wheel, preferably made of steel, that can use rims that have a reduced thickness with respect to current ones, so that it can be used also on purely road vehicles and not only on off-road vehicles.

Another object of the invention is to provide a wheel, preferably made of steel, that does not require additional processes for cleaning the welding bead between the rim and the front flange or the areas contiguous to the bead.

A further object of the invention is to provide a wheel that allows a weight saving, to the full advantage of the consumption of the vehicle on which it is mounted and of its emissions.

Furthermore, an object of the present invention is to overcome the drawbacks of the background art in a manner that is alternative to any existing solutions.

Not least object of the invention is to provide a wheel that is highly reliable, relatively easy to manufacture and at competitive costs.

This aim, these objects and others which will become better apparent hereinafter are achieved by a wheel according to claim 1, optionally provided with one or more of the characteristics of the dependent claims and by a manufacturing method of said wheel according to the corresponding independent claim, optionally provided with one or more of the characteristics of the claims that depend from it. A further aspect of the invention concerns a method according to claim 7 for manufacturing the wheel of claim 1.

Further characteristics and advantages of the invention will become better apparent from the description of a preferred but not exclusive embodiment of the wheel according to the invention, illustrated by way of nonlimiting example in the accompanying drawings, wherein:
Figure 1 is a sectional view of part of a steel wheel according to the prior art;
Figure 2 is a sectional view of part of a wheel according to the invention;
Figure 3 is a sectional view of a detail of the preceding figure;
Figure 4 is a sectional view of part of the rim of the wheel of Figure 2;
Figure 5 is a sectional view of part of the disc of the wheel of Figure 2;

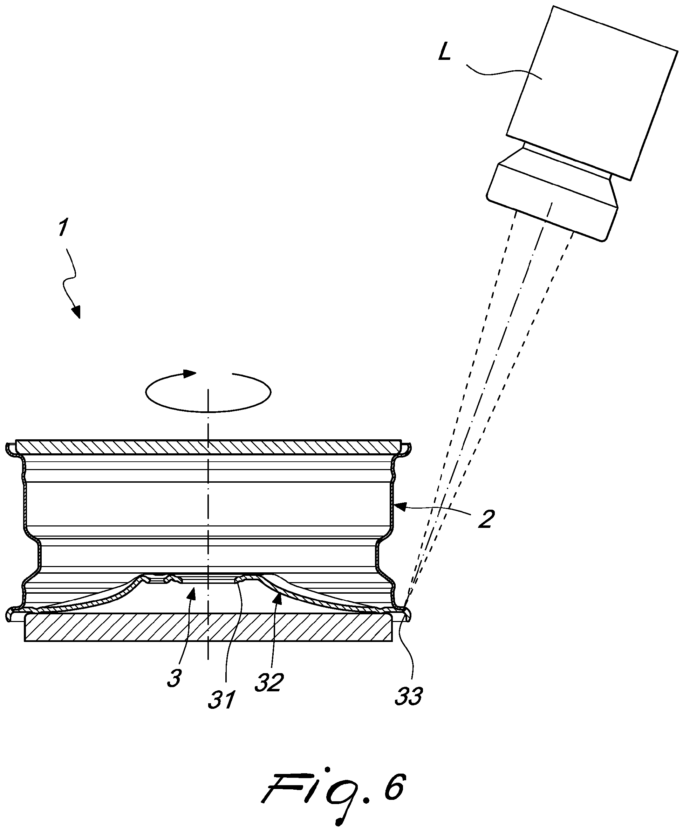

Figure 6 is a schematic view of a step of the manufacture of the wheel according to the invention;
Figure 7 is a perspective view of a wheel according to the invention;
Figure 8 is a Wöhler diagram which compares the results of the tests of a traditional wheel and of a wheel according to the invention, referred to the minimum ones provided according to the ECE R124 standard.

With reference to the cited figures, the wheel according to the invention, designated generally by the reference numeral 1, comprises a rim 2 and a disc 3 which are mutually coupled so as to form the wheel 1.

The rim portion 2 in turn comprises a central body part 27 which has a substantially cylindrical extension and an internal shoulder profile 21 which is arranged at a first end (or base) of the body 27 and is configured to receive an internal edge of a tire.

The terms "internal" or "external" are used here with reference to the condition of mounting of the wheel 1 on the vehicle: "internal" means directed toward the vehicle, while "external" means directed in the opposite direction.

It should be noted that the central body part 27 is provided with regions that have a different radius, are mutually blended and form for example stiffening grooves 26 or protrusions 25, which are variously provided in the central body 27 according to operating requirements (e.g., width and diameter) and on which one dwells no further.

If the tire is of the tubeless type, the central body 27 forms part of the hermetic chamber in which the pressurized fluid (usually air or nitrogen or a mixture of the two) that keeps the tire inflated is present; if instead the tire is of the type with an inner tube, the central body 27 forms part of the chamber in which the inner tube is accommodated.

The internal shoulder profile 21 is configured to receive an internal edge of a tire and constitutes an abutment for the latter when it is mounted on the wheel 1.

The rim portion 2 furthermore comprises a terminal end 22 which is arranged at a second and opposite end (or base) of the body 27.

Moving on now to the disc 3 as a whole, it comprises a hub portion 31, which is configured to be connected to an axle of the vehicle, a perimetric front flange 32 and a connecting portion 33 which connects the hub portion 31 to the front flange 32.

The three portions 31, 32, 33 of the disc 3 are preferably monolithic (provided as a single part) with each other.

The hub portion 31 is arranged centrally on the disc 3 and is configured to be connected to an axle of the vehicle; for example, the hub portion 31 is provided for this purpose at least with through holes 38 in which screws or bolts are installed which couple the wheel 1 to the axle of the vehicle and with a central hole 39 in which the axle of the vehicle is seated.

The front flange 32 is instead arranged at the radial peripheral region of the disc 3 and substantially constitutes a continuous circular border (or edge) thereof.

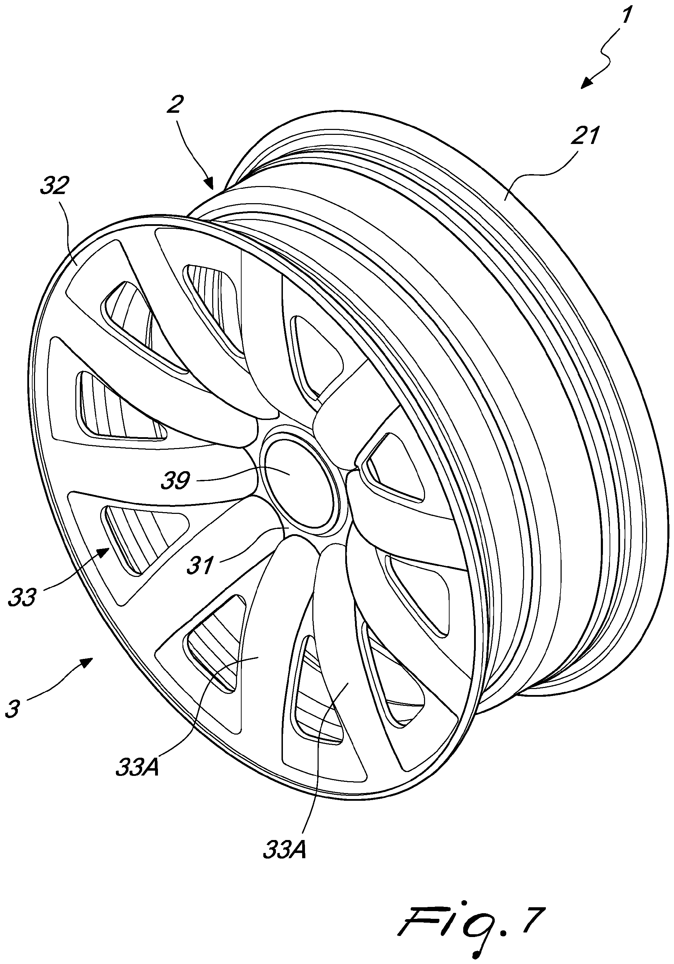

In some embodiments, the connecting portion 33 that connects the hub portion 31 to the front flange 32 is provided by means of a single continuous wall (optionally provided with lightening or ventilation holes), whereas in other embodiments, such as the preferred one shown in Figure 7, it comprises a plurality of solid spokes 33A or wire spokes which extend radially from the hub portion 31 in order to connect it to the front flange 32; the number and shape of the spokes 33A is variable according to the requirements.

According to the invention, the front flange 32 is provided with an annular seat 35 in which the terminal end 22 of the rim 2 is at least partly accommodated so as to form an external shoulder profile 9 of the wheel 1, which is configured to receive the other edge (the outer one) of a tire.

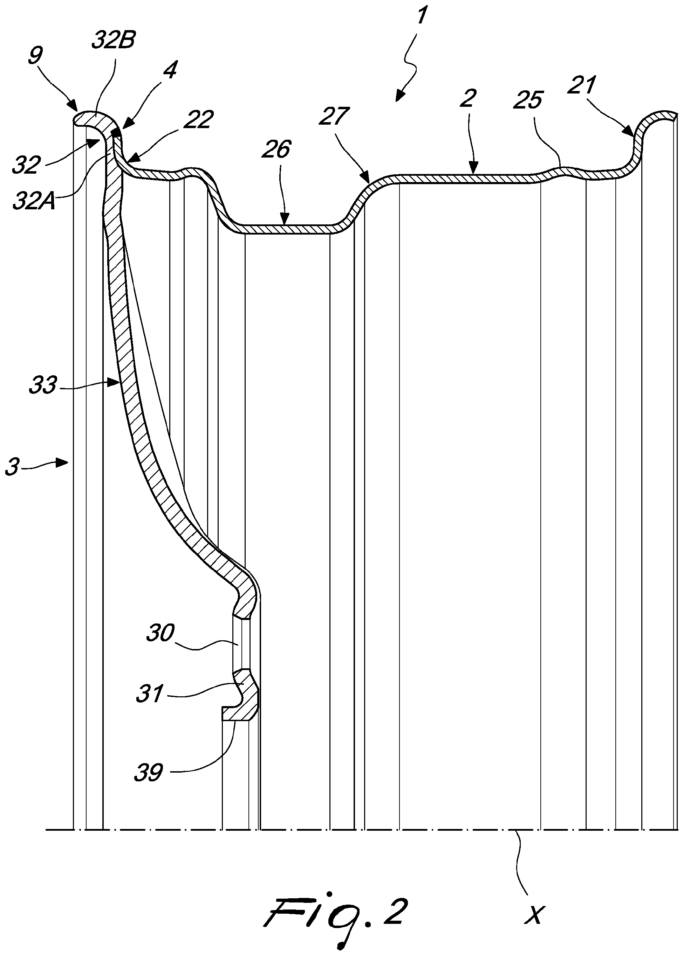

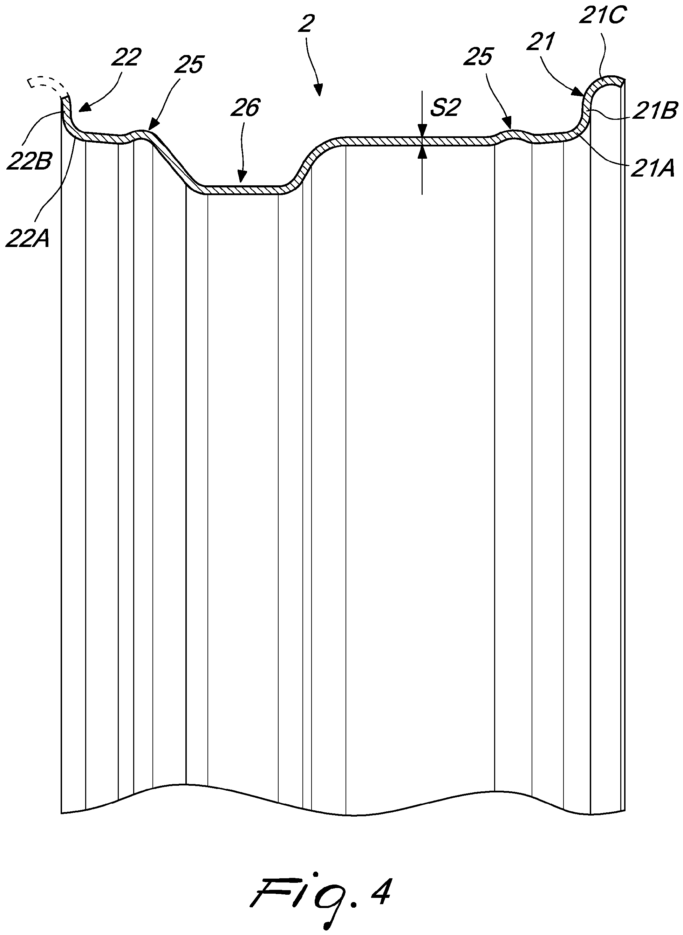

It should be noted that, as is evident from Figures 2 and 4, the rim portion 2 (comprising therein the central body 27, the internal shoulder profile 21 and the terminal end 22) is monolithic.

The internal shoulder profile 21 provides in practice a continuous annular edge that protrudes from the central body 27 and comprises:
a curved blending portion 21A with the central body 27,
a substantially radial wall portion 21B, which is extended radially, and
a countersunk terminal inlet portion 21C, which facilitates the mounting of the tire.

Although this is not clearly visible in the drawings, preferably the rim portion 2 has a wall thickness S2 which varies in a longitudinal direction and is preferably provided by means of a single piece of metal plate, as will be described better hereinafter during the description of the manufacturing process of the wheel 1. This characteristic allows to adopt wall thicknesses S2 which are consistent with the necessary structural strength, with a significant saving in weight and material.

Going back to the front flange 32, it comprises a radially extended portion 32A which is connected to an edge 32B that is bent outward; the edge bent outward 32B is arranged substantially perpendicular or, as an alternative, at an angle to the radially extended portion 32A and constitutes a flared region of the external shoulder profile 9, in order to facilitate the mounting of the tire, in a manner similar to the terminal inlet portion of the other shoulder profile, the internal one, 21.

Preferably, the entire disc 3 has the same wall thickness S3 (which remains constant over its entire extension) and is preferably provided by means of a single piece of sheet metal, as will be described better hereinafter during the description of the process for the manufacture of the wheel 1.

The terminal end 22 preferably comprises a blending portion 22A with the central body 27 and a radial wall portion 22B which is extended substantially radially and constitutes the outermost portion of said terminal end 22.

Preferably, as in the illustrated example, the seat 35 accommodates the entire radial wall portion 22B and at least one region of the blending portion 22A.

Differently from the internal shoulder profile 21, therefore, the external shoulder profile 9 is provided by the joining of the rim 2 and of the flange 32; preferably, with reference to the S-like shape of the outer shoulder profile, its radial wall is therefore provided at an overlap of the rim 2 and of the disc 3.

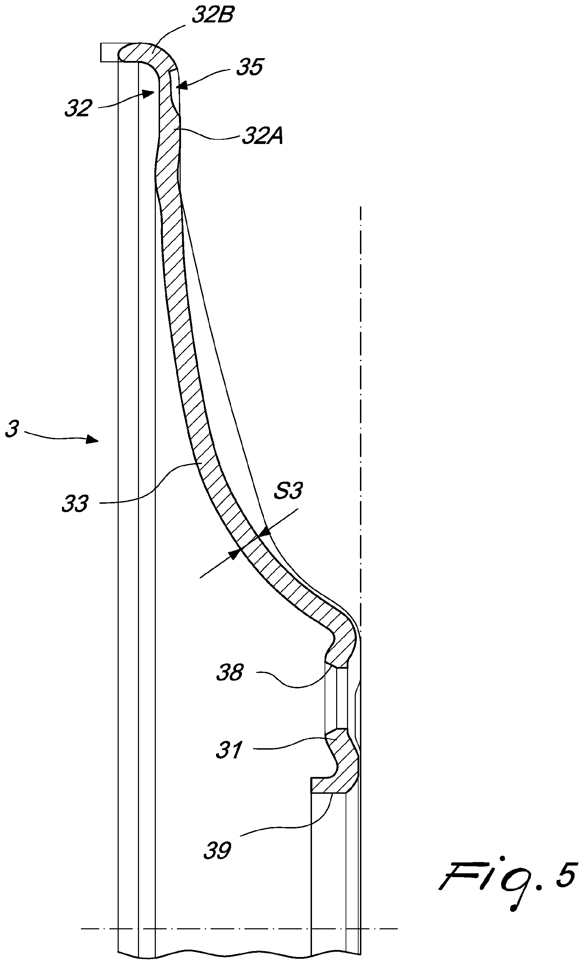

The annular seat 35, also shown in Figure 5, is extended in a continuous annular manner over the entire face of the front flange 32 that is directed toward the rim portion 2, which is arranged at the terminal end 22, so as to allow the accommodation, preferably over the entire thickness, of the latter.

The annular seat 35 is preferably provided at the radially extended portion 32A of the front flange 32 and on the face thereof that is directed toward the rim portion 2.

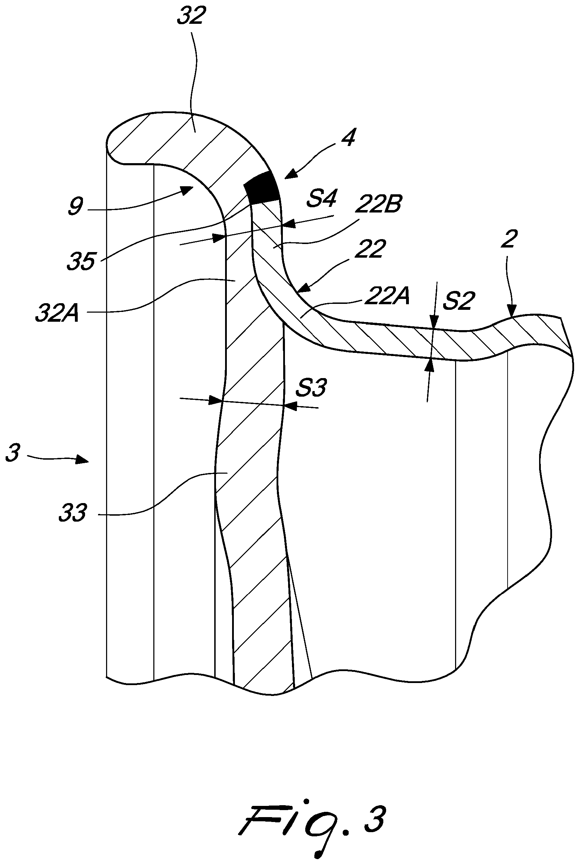

Preferably, in the region in which the annular seat 35 accommodates the terminal end 22, the wall thickness, designated by S4 in Figure 3, is substantially equal to the wall thickness S3 of the disc 3.

This characteristic can be achieved for example by chip-forming machining, providing the annular seat 35 with a depth that is approximately equal to the thickness S2 of the rim portion 2, so that when the terminal end 22 is accommodated in the annular seat 35 the wall thickness in the overlap region S4 is equal to S3.

The terminal end 22 of the rim 2 and the front flange 32 of the disc 3 are coupled by means of a weld 4 which is extended preferably in a continuous annular manner and couples the terminal end 22 to the front flange 32.

Preferably, in order to avoid additional machining operations, the weld 4 is an autogenous weld 4 without weld material.

Preferably, the annular seat 35 is sized to as to have the same dimensions and shape as the terminal end 22, so that when the latter is accommodated in the former no space of the annular seat 35 remains free. Said seat is essentially entirely filled with the terminal end 22 accommodated therein.

The (preferential) absence of the weld material, together with the presence of the internal annular seat 35 that accommodates the terminal end 22, allows to avoid excessive thicknesses and additional machining operations.

Preferably, the autogenous weld without weld material is a concentrated energy weld and even more preferably is an electron beam weld or laser weld.

Preferably, the weld 4 is a continuous laser weld over the entire circumference.

In alternative embodiments, the welding is a so-called friction stir weld.

As regards the materials, preferably the rim 2 is provided from a single monolithic steel piece; the disc 3 is likewise provided from a single monolithic steel piece.

According to the invention the wheel 2 is made of low-alloy steel and the disc 3 is made of two-phase ferritic/martensitic steel.

From the embodiment just described it can be appreciated that the weld 4, in the condition in which the tire is mounted, is completely concealed from view and is arranged preferably at the outer edge of the tire.

The preferential use of a material that is easy to recycle and has a relatively low cost such as steel furthermore has respective advantages.

From a purely structural viewpoint, furthermore, it is possible to reduce the wall thickness of the rim portion 2 with respect to steel rims solutions of the background art, the thickness reduction S2 is comprised approximately between 15% and 20%, with respect to a steel wheel provided according to the background art and capable of withstanding the same mechanical stresses.

The wheels 1 provided according to the invention prove themselves particularly suitable also for use in vehicles that are not intended only for off-road use, since they are lighter as a whole.

Intuitively, this aspect has a positive impact also on the fuel consumption of the vehicle and therefore on the polluting emissions thereof, which are reduced.

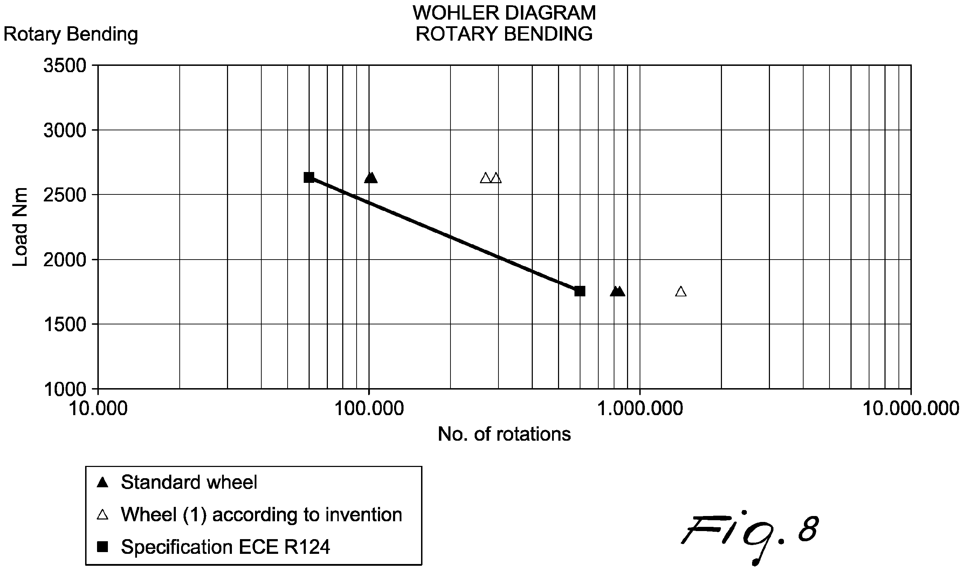

Moving on, furthermore, to an analysis of the structural behavior of the wheels 1 provided according to the invention and of comparable steel wheels of a traditional type (e.g., such as the ones of Figure 1), reference should be made to Figure 8.

This figure shows a Wöhler diagram (which relates the alternating component of a fatigue cycle with the number of cycles that a specimen withstands prior to failure at a preset probability) regarding traditional steel wheels ("Standard wheels"), wheels 1 according to the invention, with reference to the minimum parameters set by the ECE R124 standard.

The tests comply with the standard cited above and in the diagram of Figure 8 a traditional steel wheel and a wheel 1 according to the invention have been subjected to the fatigue test; in order to make the test comparable, the two compared wheels are of a compatible type, i.e., they have the same size and substantially the same shape, have the possibility of mounting on the same vehicle and are made of the same material, both in terms of quality and in terms of thicknesses.

As is immediately detectable from the Wöhler diagram of Figure 8, the wheel according to the invention, at the reference load of 2.631 kNm, has a number of number of cycles prior to failure equal (in two different measurements) to 269,229 and 293,618, distinctly higher than the number of number of rotations prior to failure of a traditional wheel, which, in the same reference conditions, is equal to 100,697 and 102,895 (in two different measurements).

The same thing, in an even more evident manner, is observed if the reference load is 1.754 kNm, upon which the wheel according to the invention has a number of cycles prior to failure (in two different measurements) equal to 1,409,200 and 1,417,770, distinctly higher than the number of number of cycles prior to failure (in two different measurements) of a traditional wheel, which in the same reference conditions is equal to 840,137 and 810,956.

Moving on now to analyze the process for manufacturing the wheel 1 according to the invention, in its general outline it comprises the steps of:
a) providing a rim 2 of the wheel 1 that comprises a substantially cylindrically extended central body 27, provided at least at a first end with an internal shoulder profile 21 that is configured to receive an internal edge of a tire and provided at a second and opposite terminal end 22,
b) providing the disc 3 of the wheel 1, which in turn comprises a hub portion 31, configured to be connected to an axle of the vehicle, a front flange 32 and a connecting portion 33 which connects the hub portion 31 to the front flange 32,
c) providing in said front flange 32 an annular seat 35, which is arranged at an internal face of said front flange 32 that is directed toward said rim 2,
d) accommodating at least partly the terminal end 22 in said internal annular seat 35,
e) welding together the terminal end 22 and the front flange 32 substantially at at least part of said internal annular seat 35.

Preferably, step b) comprises the substep of shaping an external continuous peripheral edge by bending it toward the front part so as to generate a bent circular terminal edge 32B that is configured to provide, together with the terminal end 22, an external shoulder profile 9.

Preferably, step e) provides for welding together the terminal end 22 and the front flange 32 by means of a circumferentially continuous weld, preferably of the type without weld material, even more preferably by means of a concentrated energy weld, even more preferably by means of a circumferentially continuous laser weld.

Preferably, step c) entails providing the internal annular seat 35 by means of a chip-forming machining, preferably turning or milling.

Preferably, step a) entails providing at a free circumferential edge of said terminal end 22 a chip-forming machining process.

In a preferred embodiment, step a) comprises the following substeps:
a1) providing a strip of metal tape, preferably steel, even more preferably low-alloy steel;
a2) bending said metal tape strip, preferably by means of a bending process;
a3) welding together two opposite flaps of said bent tape in order to provide a metallic cylindrical body;
a4) flattening the welding bead provided in the preceding step and (optionally) rounding again the metallic cylindrical body;
a5) performing at least one, preferably a plurality, of rolling processes in order to provide at least one internal shoulder profile 21 and a parallel terminal end 22 at the opposite end faces of said metallic cylindrical body, said shoulder profile 21 being configured to receive an edge of a tire and said terminal end 22 being configured to provide an external shoulder profile 9 when the rim portion 2 is welded to the disc 3.

Chip-forming machining is then performed downstream of these substeps at the terminal end 22, eliminating any protruding portions.

Optional substeps of step a) are then provided, such as for example steps for the control and/or blanking and/or coining of an accommodation hole of the tire valve; these steps are per se known and therefore are not dwelt upon further.

In a preferred embodiment, step b) comprises the following substeps:
b1) providing a metallic plate, preferably made of steel, even more preferably two-phase ferritic/martensitic steel;
b2) shaping said metallic plate like a metal disc, preferably by blanking;
b3) shaping and drawing said metallic disc, in order to provide at least the hub portion 31, the front flange 32 and the connecting portion 33.

Optional substeps of step b) are then provided, such as for example steps for control and/or blanking and/or countersinking and/or coining holes or openings variously arranged on the finished disc (e.g., in order to provide the central hole, in order to provide the holes for the screws for coupling to the axle of the vehicle, in order to provide ventilation openings or the like); these steps are per se known and therefore are not dwelt upon further.

In practice it has been found that the invention achieves the intended aim and objects by providing a wheel, preferably made of steel, for vehicles, which is strong and relatively inexpensive if compared with alloy wheels.

The wheel according to the invention is furthermore as a whole less heavy than traditional steel wheels, with the advantage of allowing a more versatile use (on various types of vehicles) and of allowing a fuel saving and a reduction of polluting emissions.

The wheel according to the invention may furthermore be recycled and/or repaired easily if necessary.

The invention thus conceived is susceptible of numerous modifications and variations, all of which are within the scope of the inventive concept; all the details may furthermore be replaced with other technically equivalent elements.

In practice, the materials used, so long as they are compatible with the specific use, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.
Figures Legenda
Prior Art = Prior Art
Wholer Diagram Rotary Bending = Wholer Diagram Rotary Bending
Rotary Bending = Rotary Bending
Load Nm = Load Nm
No. of rotations = No. of rotations
Standard wheel = Standard wheel
Wheel (1) according to the invention = Wheel (1) according to the invention
Specification ECE R124 = Specification ECE R124

## Claims

1. A wheel (1) for vehicles, comprising a rim (2) and a disc (3) which are mutually coupled,
wherein the rim (2) comprises:
- a substantially cylindrically extended central body part (27),
- an internal shoulder profile (21), which is arranged at a first end of said body (27) and is configured to receive an internal edge of a tire,
- a terminal end (22), which is arranged at a second and opposite end of said body (27),
wherein the disc (3) comprises:
- a hub portion (31), configured to be connected to an axle of the vehicle, a perimetric front flange (32) and a connecting portion (33) which connects the hub portion (31) to the front flange (32),
and wherein the front flange (32) is provided with an annular seat (35) in which the terminal end (22) of the rim (2) is accommodated at least partially in order to form an external shoulder profile (9),
**characterized in that** the rim (2) is made of low-alloy steel and the disc (3) is made of two-phase ferritic/martensitic steel.

2. The wheel (1) according to the preceding claim, wherein the terminal end (22) of the rim (2) and the front flange (32) of the disc (3) are coupled by means of a weld (4), which is provided substantially at said internal annular seat (35).

3. The wheel (1) according to the preceding claim, wherein the weld (4) is a weld without weld material.

4. The wheel (1) according to the preceding claim, wherein the weld (4) is a laser weld.

5. The wheel (1) according to one or more of the preceding claims, wherein the rim (2) is provided from a single monolithic steel piece and wherein the disc (3) is provided from a single monolithic steel piece.

6. The wheel (1) according to one or more of the preceding claims, wherein the connecting portion (33) comprises a plurality of spokes that extend radially from the hub portion (31) and connect it to the front flange (32).

7. A process for the manufacture of a wheel according to one or more of the preceding claims, comprising the steps of:
a) providing a rim (2) of the wheel (1) which comprises a substantially cylindrically extended central body (27), which is provided at least at a first end with an internal shoulder profile (21) configured to receive an internal edge of a tire and is provided at a second and opposite end of terminal end (22),
b) providing a disc (3) of the wheel (1), which in turn comprises a hub portion (31), configured to be connected to an axle of the vehicle, a front flange (32) and a connecting portion (33) which connects the hub portion (31) to the front flange (32),
c) providing in said front flange (32) an annular seat (35), which is arranged at an internal face of said front flange (32) that is directed toward the rim (2),
d) accommodating at least partly the terminal end (22) in said internal annular seat (35),
e) welding together the terminal end (22) and the front flange (32) substantially at at least part of said internal annular seat (35),
**characterized in that** the rim (2) is made of low-alloy steel and the disc (3) is made of two-phase ferritic/martensitic steel.

8. The process according to the preceding claim, wherein step e) provides for welding together the terminal end (22) and the front flange (32) by means of a circumferentially continuous weld without weld material, preferably with concentrated energy, even more preferably by means of a circumferentially continuous laser weld.

9. The process according to claim 7 or 8, wherein step c) entails providing the internal annular seat (35) by means of a chip-forming machining process, preferably turning or milling.

## Patentansprüche

1. Ein Rad (1) für Fahrzeuge, das eine Felge (2) und eine Scheibe (3) umfasst, die miteinander verbunden sind,
wobei die Felge (2) Folgendes umfasst:
- einen sich im Wesentlichen zylindrisch erstreckenden zentralen Körperabschnitt (27),
- ein inneres Schulterprofil (21), das an einem ersten Ende des Körpers (27) angeordnet und ausgebildet ist, um eine Innenkante eines Reifens aufzunehmen,
- ein terminales Ende (22), das an einem zweiten, gegenüberliegenden Ende des Körpers (27) angeordnet ist,
wobei die Scheibe (3) Folgendes umfasst:
- einen Nabenteil (31), ausgebildet, um mit einer Achse des Fahrzeugs verbunden zu werden, einen perimetrischen vorderen Flansch (32) und einen Verbindungsabschnitt (33), der den Nabenteil (31) mit dem vorderen Flansch (32) verbindet,
und wobei der vordere Flansch (32) mit einem ringförmigen Sitz (35) versehen ist, in welchen das terminale Ende (22) der Felge (2) zumindest teilweise aufgenommen ist, um ein äußeres Schulterprofil (9) zu bilden,
**dadurch gekennzeichnet, dass** die Felge (2) aus niedriglegiertem Stahl besteht und die Scheibe (3) aus zweiphasigem ferritischen/martensitischen Stahl besteht.

2. Das Rad (1) gemäß dem obigen Anspruch, wobei das terminale Ende (22) der Felge (2) und der vordere Flansch (32) der Scheibe (3) über eine Schweißung (4) verbunden sind, die im Wesentlichen an dem inneren ringförmigen Sitz (35) angebracht ist.

3. Das Rad (1) gemäß dem obigen Anspruch, wobei die Schweißung (4) eine Schweißung ohne Schweißmaterial ist.

4. Das Rad (1) gemäß dem obigen Anspruch, wobei die Schweißung (4) eine Laserschweißung ist.

5. Das Rad (1) gemäß einem oder mehreren der obigen Ansprüche, wobei die Felge (2) aus einem einzigen monolithischen Stahlteil besteht und die Scheibe (3) aus einem einzigen monolithischen Stahlteil besteht.

6. Das Rad (1) gemäß einem oder mehreren der obigen Ansprüche, wobei der Verbindungsabschnitt (33) eine Vielzahl von Speichen umfasst, die sich radial vom Nabenteil (31) erstrecken und ihn mit dem vorderen Flansch (32) verbinden.

7. Ein Verfahren zur Herstellung eines Rades gemäß einem oder mehreren der obigen Ansprüche, das folgende Schritte umfasst:
a) das Bereitstellen einer Felge (2) des Rades (1), die einen sich im Wesentlichen zylindrisch erstreckenden zentralen Körper (27) umfasst, welcher zumindest an einem ersten Ende mit einem inneren Schulterprofil (21) versehen ist, das ausgebildet ist, um eine Innenkante eines Reifens aufzunehmen, und an einem zweiten, gegenüberliegenden Ende des terminalen Endes (22) angebracht ist,
b) das Bereitstellen einer Scheibe (3) des Rades (1), die wiederum einen Nabenteil (31) umfasst, der ausgebildet ist, um mit einer Achse des Fahrzeugs verbunden zu werden, einen vorderen Flansch (32) und einen Verbindungsabschnitt (33), der den Nabenteil (31) mit dem vorderen Flansch (32) verbindet,
c) das Anbringen eines ringförmigen Sitzes (35) in dem vorderen Flansch (32), wobei der ringförmige Sitz an einer Innenfläche des vorderen Flanschs (32) angeordnet ist, die der Felge (2) zugewandt ist,
d) das zumindest partielle Unterbringen des terminalen Endes (22) in dem inneren ringförmigen Sitz (35),
e) das Zusammenschweißen des terminalen Endes (22) und des vorderen Flanschs (32), im Wesentlichen an zumindest einem Teil des inneren ringförmigen Sitzes (35),
**dadurch gekennzeichnet, dass** die Felge (2) aus niedriglegiertem Stahl besteht und die Scheibe (3) aus zweiphasigem ferritischen/martensitischen Stahl besteht.

8. Das Verfahren gemäß dem obigen Anspruch, wobei Schritt e) das Zusammenschweißen des terminalen Endes (22) und des vorderen Flanschs (32) durch eine durchgehende Umfangsschweißung ohne Schweißmaterial vorsieht, vorzugsweise mit konzentrierter Energie, noch stärker bevorzugt mittels einer durchgehenden Laser-Umfangsschweißung.

9. Das Verfahren gemäß Anspruch 7 oder 8, wobei Schritt c) das Anbringen des inneren ringförmigen Sitzes (35) durch ein spannendes Bearbeitungsverfahren, vorzugsweise Drehen oder Fräsen, beinhaltet.

## Revendications

1. Roue (1) pour des véhicules, comprenant une jante (2) et un disque (3) qui sont accouplés mutuellement,
dans laquelle la jante (2) comprend :
- une partie corps (27) central étendu sensiblement de manière cylindrique,
- un profil d'épaulement interne (21), qui est agencé à une première extrémité dudit corps (27) et est configuré pour recevoir un bord interne d'un pneu,
- une extrémité terminale (22), qui est agencée à une seconde extrémité, opposée, dudit corps (27),
dans laquelle le disque (3) comprend :
- une portion moyeu (31), configurée pour être reliée à un essieu du véhicule, un flasque avant (32) périmétrique et une portion de liaison (33) qui relie la portion moyeu (31) au flasque avant (32),
et dans laquelle le flasque avant (32) est doté d'un siège annulaire (35) dans lequel l'extrémité terminale (22) de la jante (2) est installée au moins en partie afin de former un profil d'épaulement externe (9),
**caractérisée en ce que** la jante (2) est faite d'acier faiblement allié et le disque (3) est fait d'acier ferritique/martensitique à deux phases.

2. Roue (1) selon la revendication précédente, dans laquelle l'extrémité terminale (22) de la jante (2) et le flasque avant (32) du disque (3) sont accouplés au moyen d'une soudure (4), qui est fournie sensiblement au niveau dudit siège annulaire (35) interne.

3. Roue (1) selon la revendication précédente, dans laquelle la soudure (4) est soudée sans matériau de soudure.

4. Roue (1) selon la revendication précédente, dans laquelle la soudure (4) est une soudure au laser.

5. Roue (1) selon une ou plusieurs des revendications précédentes, dans laquelle la jante (2) est fournie à partir d'une seule pièce en acier monolithique et dans laquelle le disque (3) est fourni à partir d'une seule pièce en acier monolithique.

6. Roue (1) selon une ou plusieurs des revendications précédentes, dans laquelle la portion de liaison (33) comprend une pluralité de rayons qui s'étendent radialement à partir de la portion moyeu (31) et la relient au flasque avant (32).

7. Procédé pour la fabrication d'une roue selon une ou plusieurs des revendications précédentes, comprenant les étapes consistant à :
a) fournir une jante (2) de la roue (1) qui comprend un corps (27) central étendu sensiblement de manière cylindrique, qui est doté au moins à une première extrémité d'un profil d'épaulement interne (21) configuré pour recevoir un bord interne d'un pneu et est fourni à une seconde extrémité, opposée, d'une extrémité terminale (22),
b) fournir un disque (3) de la roue (1), qui à son tour comprend une portion moyeu (31), configurée pour être reliée à un essieu du véhicule, un flasque avant (32) et une portion de liaison (33) qui relie la portion moyeu (31) au flasque avant (32),
c) fournir dans ledit flasque avant (32) un siège annulaire (35), qui est agencé au niveau d'une face interne dudit flasque avant (32) qui est dirigée vers la jante (2),
d) installer au moins en partie l'extrémité terminale (22) dans ledit siège annulaire (35) interne,
e) souder ensemble l'extrémité terminale (22) et le flasque avant (32) sensiblement au niveau d'au moins une partie dudit siège annulaire (35) interne,
**caractérisé en ce que** la jante (2) est faite d'acier faiblement allié et le disque (3) est fait d'acier ferritique/martensitique à deux phases.

8. Procédé selon la revendication précédente, dans lequel l'étape e) fournit pour les souder ensemble l'extrémité terminale (22) et le flasque avant (32) au moyen d'une soudure continue de manière circonférentielle sans matériau de soudure, de préférence avec une énergie concentrée, de manière encore davantage préférée au moyen d'une soudure au laser continue de manière circonférentielle.

9. Procédé selon la revendication 7 ou 8, dans lequel l'étape c) implique la fourniture du siège annulaire (35) interne au moyen d'un procédé d'usinage formant des copeaux, de préférence un tournage ou un fraisage.
